# EUROPEAN PATENT APPLICATION

(11) **EP 3 340 209 A1**
(43) Date of publication of application: **27.06.2018**
(21) Application number: 17849896.0
(22) Date of filing: 25.09.2017
(51) Int. Cl.: G09B 25/04, A47F 3/00, G09F 9/00

(54) **HOUSING AND SYSTEM**

(30) Priority: 28.09.2016 JP 2016190359
(71) Applicant: Boe Japan Co.,Ltd., Tokyo 108-0075 (JP)
(72) Inventor: KUBOSHIMA Chikara, Tokyo 108-0075 (JP)
(74) Representative: Vossius & Partner Patentanwälte Rechtsanwälte mbB
(86) International application number: PCT/JP2017/034539
(87) International publication number: WO 2018/062102

(57) **Abstract**

To provide a housing enabling two-way communication of information, the present invention is a housing 1 to store any article A in a storage space surrounded by a plurality of walls 10, comprising: a transparent display 20 of displaying an operation screen; an input detection unit 30 of detecting an input onto an input area displayed on the operation screen; a memory unit of storing data; and a person specifying unit 60 or 70 of specifying a person, wherein the housing 1 specifies the person with the person specifying unit 60 or 70 to display a home screen GM corresponding to the person on the transparent display 20.

## Description

### TECHNICAL FIELD

The present invention relates to a housing and a system to store any article in a storage space.

### BACKGROUND ART

Conventionally, a housing such as a showcase to store articles in a storage space or a refrigerator to store foods and drinks in a storage space is to merely keep or conserve such goods, but in recent years, it is known that there is a housing capable of displaying information on articles in the storage space on a display thereof.

Further, for example, in Patent Literatures 1 to 4, it is disclosed that a housing comprises a transparent display on which television, photographed image/video, information on articles, or the like is displayed.

### Citation List

### Patent Literature

Patent Literature 1: Japanese Patent Application Laid-Open No. 2004-293906
Patent Literature 2: International Publication No. 2013/048146
Patent Literature 3: US Patent Application Publication No. 2013/0169551
Patent Literature 4: US Patent Application Publication No. 2013/0314923

### SUMMARY OF INVENTION

### Technical Problem

However, in the housings disclosed in Patent Literatures 1 to 4, it is possible to select information by switching display contents, but it is not possible to take in information from a user since it is basically limited to transmit information in one-way.

It is, therefore, an object of the present invention to provide a housing and a system enabling two-way communication of information.

### Solution to Problem

(1) A first aspect in accordance with the present invention provides a housing to store any article in a storage space surrounded by a plurality of walls, comprising: a transparent display of displaying an operation screen; and an input detection unit of detecting an input onto an input area displayed on the operation screen.
(2) In the above (1) of the first aspect, the housing may further comprise a voice input unit and a voice output unit.
(3) In the above (2) of the first aspect, the housing may have a conversation with the person based on the data corresponding to the person, the data being stored in the memory unit.
(4) In any one of the above (1) to (3) of the first aspect, the housing may output data corresponding to the person on the transparent display.
(5) In any one of the above (1) to (4) of the first aspect, the person specifying unit may be a reading unit of reading terminal information of a mobile terminal or a face authentication unit of performing face authentication of the person.
(6) In any one of the above (1) to (5) of the first aspect, the housing may further comprise a person detection unit of detecting approach of the person, and a health condition measuring unit of measuring health condition of the person, wherein the housing detects the person with the person detection unit to start measuring with the health condition measuring unit and store data on the health condition measured in the memory unit.
(7) In the above (6) of the first aspect, the health condition measuring unit may include at least one of a body temperature measuring unit of measuring body temperature of the person and a microwave sensor of measuring heart rate of the person.
(8) In any one of the above (1) to (7) of the first aspect, the housing may further comprise a building model or a map showing a layout of a building in the storage space, and light sources attached to the building model or the map, wherein the light sources are turned on or blinked according to a route from a current location to a destination when the destination is selected on the operation screen.
(9) A second aspect in accordance with the present invention provides a system comprising a housing according to any one of the above (1) to (8) of the first aspect, and a mobile terminal carried by a person to exchange data with the housing.
(10) In the above (9) of the second aspect, the system may output data, corresponding to the person specified by a person specifying unit, stored in a memory unit to the mobile terminal of the person.

### Advantageous Effects of Invention

According to the present invention, it is possible to provide a housing and a system enabling two-way communication of information.

### BRIEF DESCRIPTION OF DRAWINGS

FIG. 1 is a perspective view of a housing according to an embodiment of the present invention.
FIG. 2 is a cross-sectional view of the housing.
FIG. 3 is a schematic diagram showing an initial screen.
FIG. 4 is a schematic diagram showing a home screen.
FIG. 5 is a schematic diagram showing a guidance screen.
FIG. 6 is a schematic diagram showing a telephone screen.
FIG. 7 is a schematic diagram showing a health check screen.
FIG. 8 is a schematic diagram showing a memo screen.
FIG. 9 is a schematic diagram showing a memo movie screen.
FIG. 10 is a schematic diagram showing a television screen.

### DESCRIPTION OF EMBODIMENTS

Embodiments of the present invention are described below in detail with reference to the drawings. In the description of embodiments, the same reference signs are given to the same members throughout.

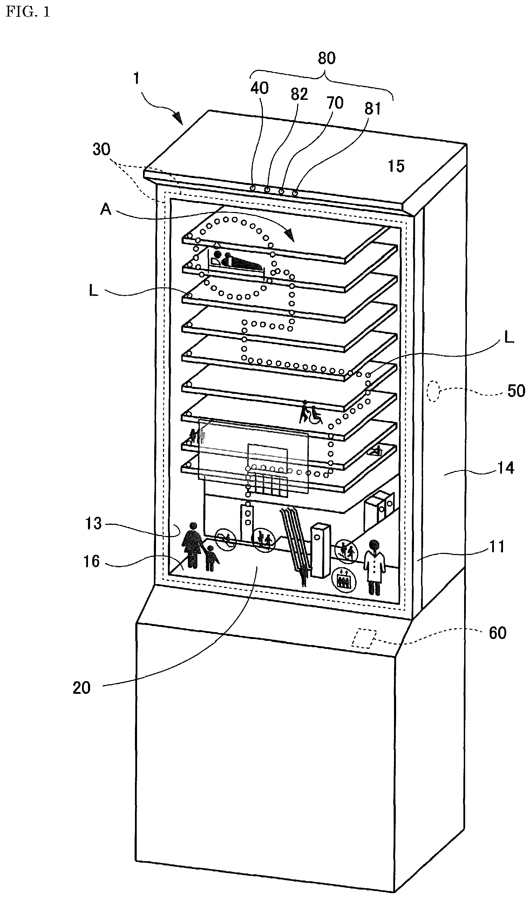

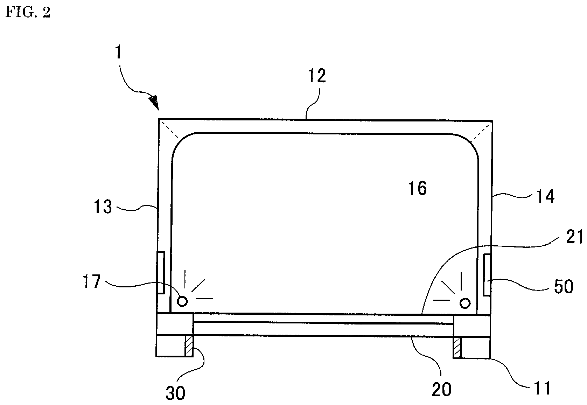

FIG. 1 is a perspective view of a housing 1 according to an embodiment of the present invention, and FIG. 2 is a cross-sectional view of the housing 1. The housing 1 shown in FIG. 1 is located at an entrance (or an entry hall) of a hospital, a department store, an art museum or the like, and is used as a comprehensive guidance device when a user or a general person makes a visit. The embodiment is described below assuming that the housing 1 is located in a hospital.

The housing 1 stores an article A in a storage space surrounded by a plurality of walls 10. The article A is a building model (hereinafter referred to as "a building model A") showing a layout of the hospital (or a building). The building model A is provided with a plurality of light sources L capable of turning on/off at appropriate points so that positions of stair(s), elevator(s), examination room(s), sickroom(s), toilet(s) can be indicated. Although the building model A is a three-dimensional object, it may be also a two-dimensional object (or a flat panel) such as a map.

The housing 1 has six walls 10 including a front wall 11, a rear wall 12, a left side wall 13, a right side wall 14, a top wall 15 and a bottom wall 16, and these walls 10 form a storage space in a substantially cuboid shape. In a space formed below the bottom wall 16, a PC (or a personal computer), which is not shown, is stored.

The front wall 11 of the walls 10 comprises a glass plate 21 such as tempered glass on an inner side and a transparent display 20 on an outer side. The front wall 11 may be configured to be capable of opening and closing by a hinge or the like.

Illumination units 17 such as LED or the like of illuminating the storage space are provided on the left side wall 13 and the right side wall 14 beside the front wall 11, respectively. The illumination unit 17 may be, as necessary, also provided on the top wall 15 and/or the bottom wall 16.

On the other hand, with respect of inner surfaces of the left side wall 13 and the right side wall 14 beside the rear wall 12, the left side wall 13 and the rear wall 12 are connected via a curved surface, and the right side wall 14 and the rear wall 12 are connected via a curved surface, to smoothly form the inner surfaces of the storage space (see FIG. 2). As a result, the illumination light irradiated from the illumination units 17 beside the front wall 11 is reflected by the rear wall 12, the left side wall 13 and the right side wall 14, and the illumination light uniformly diffuses into the storage space.

A transparent liquid crystal display or a transparent organic EL display is used as the transparent display 20 provided on the front wall 11. In addition, the transparent display 20 can display an opaque state in which the building model A in the storage space cannot be visually recognized. This opaque state is performed by turning off a voltage applied to the liquid crystal of the transparent display 20 or by displaying a dark color. The transparent display 20 may be of a planar type or a curved surface type.

Then, the housing 1 comprises an input detection unit 30 of detecting an input onto an input area in an operation screen to be displayed on the transparent display 20. The input detection unit 30 detects a position of a finger of a person M or an input tool (or a stylus) held by a hand of the person M.

The input detection unit 30 is provided on an inner periphery of the front wall 11 in a manner that infrared rays are arranged along a surface of the transparent display 20. The input detection unit 30 detects a position and a movement of the finger by detecting a position of a photodetector which cannot receive the infrared rays due to intercepting the infrared rays from a projector with the finger. To do so, the projectors and the photodetectors of the input detection unit 30 are arranged in pairs in a horizontal direction and a vertical direction of the front wall 11. However, the input detection unit 30 may be a transparent touch panel or the like provided further on the surface of the transparent display 20.

The housing 1 comprises a microphone 40 (or a voice input unit) and a speaker 50 (or a voice output unit). The microphone 40 collects voices of the person M or ambient sounds and is provided on the top wall 15 of the housing 1. On the other hand, the speaker 50 generates sounds to the person M or the surroundings and is provided on at least one of the left side wall 13 and the right side wall 14 of the housing 1.

In addition, the housing 1 comprises a reading unit 60 of reading terminal information (hereinafter referred to as "ID") of a mobile terminal S. The mobile terminal S includes not only a mobile communication terminal or the like incorporating an IC chip or a SIM card such as so-called a mobile phone or a smart phone or the like, but also a card or the like carried by the person M such as a hospital card incorporating an IC chip or an RFID tag.

If the mobile terminal S is a card or the like, the reading unit 60 is configured to read ID from the IC chip or the like in a contact or non-contact manner. On the other hand, if the mobile terminal S is a mobile communication terminal or the like, the reading unit 60 may read ID of the mobile terminal S in a contact or non-contact manner, or may read ID such as a unique number and a MAC address of the mobile terminal S via a mobile communication line or a near field communication.

Further, the housing 1 comprises a person detection unit 70 of detecting approach of the person M. The person detection unit 70 is a photographing unit (hereinafter referred to as "a photographing unit 70") of photographing the person M, and detects the approach of the person M by performing difference processing to the photographed image.

Of course, the photographing unit 70 can perform not only the detection of the approach of the person M but also take still images and/or moving images of the person M and the surroundings.

In addition, the housing 1 comprises a health condition measuring unit 80 of measuring health condition of the person M in a non-contact manner. The health condition measuring unit 80 has at least one of a body temperature measuring unit, such as a thermography 81 or an infrared temperature sensor of measuring body temperature of the person M, and a microwave sensor 82 of measuring heart rate of the person M. The health condition measuring unit 80 may have a sphygmomanometer or a weight scale, and these may be provided near the front of the housing 1 or on a floor, respectively.

The thermography 81 or the infrared temperature sensor detects infrared rays emitted by the person M to convert the infrared energy into the body temperature for measurement. In addition, the body temperature can be measured more accurately when temperature correction is performed in consideration of region, season, outside air temperature, humidity, clothes or the like.

The microwave sensor 82 irradiates microwave to the person M to measure heart rate by changes of the reflected wave, namely the Doppler effect, reflected from fluctuating (or beating) body surface of the person M. At this time, the microwave sensor 82 may measure respiratory rate.

The photographing unit 70 and the health condition measuring unit 80 may be mounted on a position/direction adjustment unit so that a photographing direction and/or a measurement direction can be automatically changed.

The transparent display 20, the input detection unit 30, the reading unit 60, the photographing unit 70 and the health condition measuring unit 80 are connected to the personal computer PC, and various processes are executed by the personal computer PC. The personal computer PC comprises a CPU and a memory unit, and is connected to the internet and an intranet in the hospital via a communication unit, and furthermore is capable of exchanging data with a cloud server CSV and/or a file server FSV. Then, the data gathered therein may be utilized as big data or learning data of artificial intelligence AI.

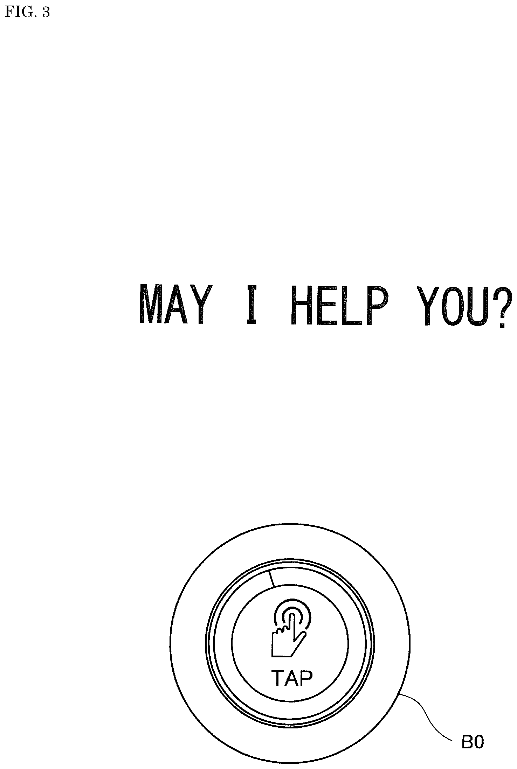

A method of using the housing 1, which is the comprehensive guidance device configured as above, by the person M (or a user) who has entered the hospital is described with reference to an operation or a display screen to be displayed on the transparent display 20 as shown in FIG. 3 to FIG. 10.

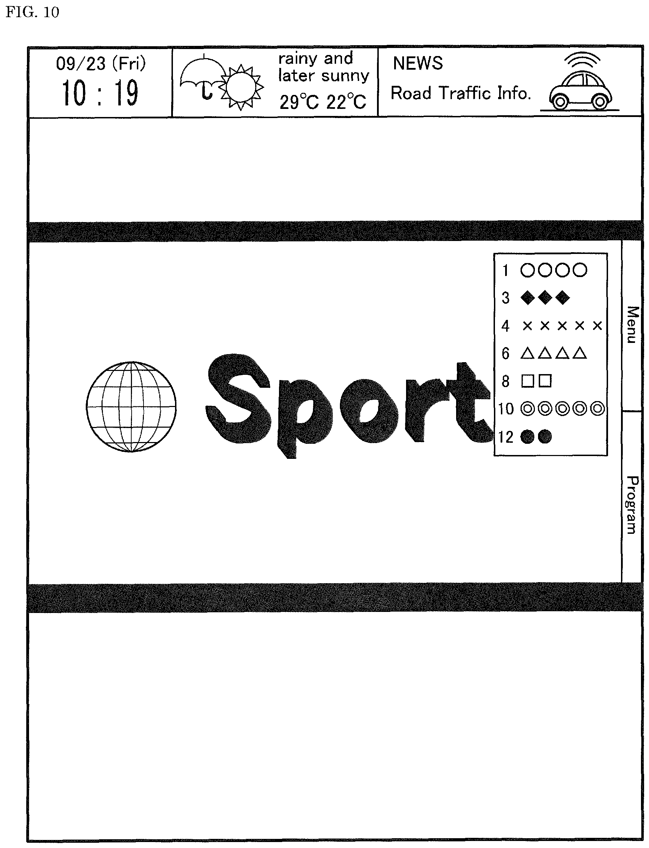

Until the person M is detected, the housing 1 displays time information such as date and time, weather information such as weather and temperature, and text information such as news in an upper area of the transparent display 20, and other area thereof is set in a transparent state in which the building model A can be visually recognized. However, it is also possible to display moving images such as TV images and video images in the other area by setting the other area in an opaque state to make the building model A invisible (see FIG. 10).

When the person M approaches the housing 1 and the photographing unit 70 detects the person M, the housing 1 switches the display screen to an initial screen (see FIG. 3) and outputs a question message such as "May I help you?" or the like from the speaker 50. At the same time, the health condition measuring unit 80 starts measuring the health condition of the person M. Various kinds of measured data may be automatically stored in the memory unit together with date and time, weather or the like.

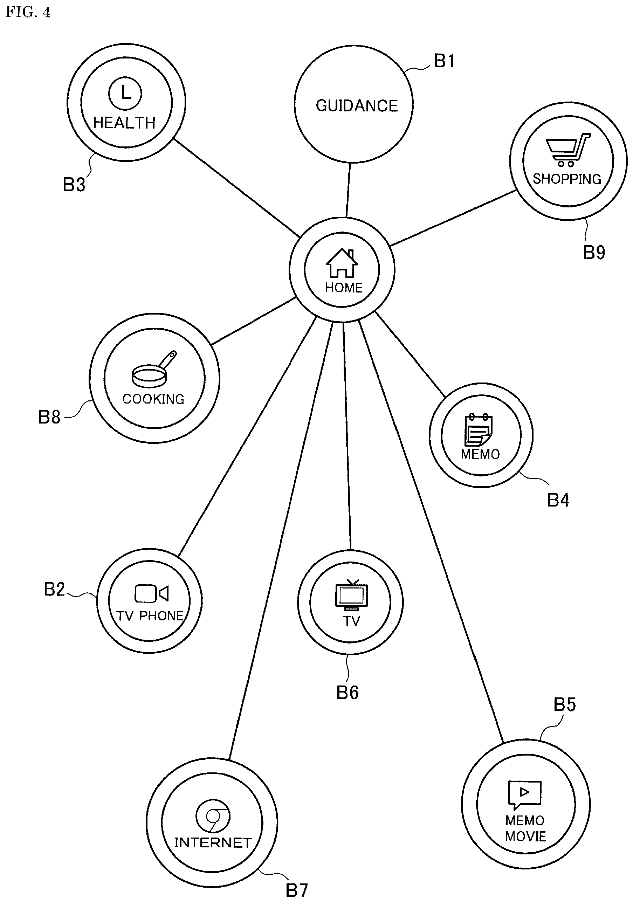

When the person M touches a button B0 on the operation screen with his/her finger, the housing 1 switches the display screen to a home screen G0 (see FIG. 4). In addition, even if the person M makes a reply in voice without touching the button B0, the housing 1 collects his/her voice with the microphone 40, judges its meaning, and switches the display screen to the home screen G0. A conversation function software (or an artificial intelligence AI) to analyze and recognize such utterance is installed on the personal computer PC. Display and conversation are supported in multiple languages.

The home screen G0 displays a button B1 to shift to a guidance screen G1, a button B2 to shift to a telephone screen G2, a button B3 to shift to a health check screen G3, a button B4 to shift to a memo screen G4, a button B5 to shift to a memo movie screen G5, a button B6 to shift to a television screen G6, a button B7 to shift to a Web browser screen G7, a button B8 to shift to a cooking recipe screen G8, a button B9 to shift to a shopping screen G9, or the like. Any button to shift to particular screen is not limited to the above, and may be added/deleted as necessary.

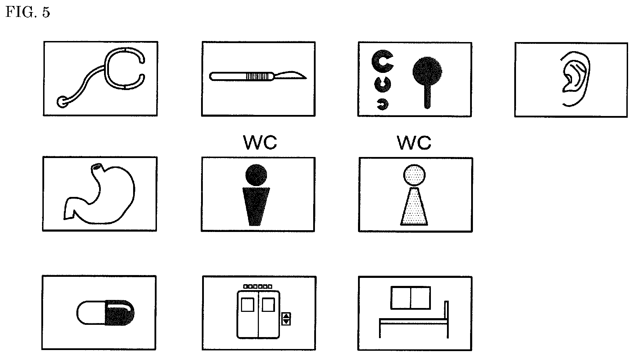

When touching the button B1 to shift to the guidance screen G1, the housing 1 displays options of destinations such as subjects of medical treatment, sickrooms, toilets or the like (see FIG. 5). When a destination is selected, the light source L of the destination of the building model A is turned on or blinked. At this time, a route from the current location to the destination may be indicated by the light sources L, or a screen showing the route may be displayed on the transparent display 20 so as to be superimposed on the building model A. Alternatively, if the person M carries the mobile terminal S having a display screen, the route from the current location to the destination may be outputted to the mobile terminal S for navigation.

In addition, it may be possible to display further particular screens by buttonizing each of subjects of medical treatment. For example, it is preferred to display a medical examination schedule, a history of each doctor or the like.

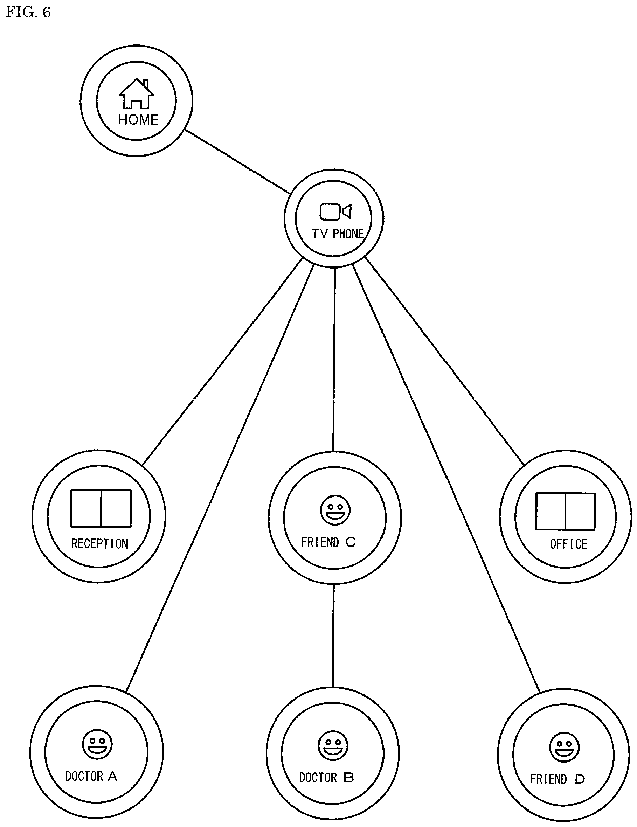

When touching the button B2 to shift to the telephone screen G2, the housing 1 displays options such as reception, doctors, sickrooms or the like that can be contacted by telephone or TV phone (see FIG. 6). The person M can make a phone call by touching an icon of any option.

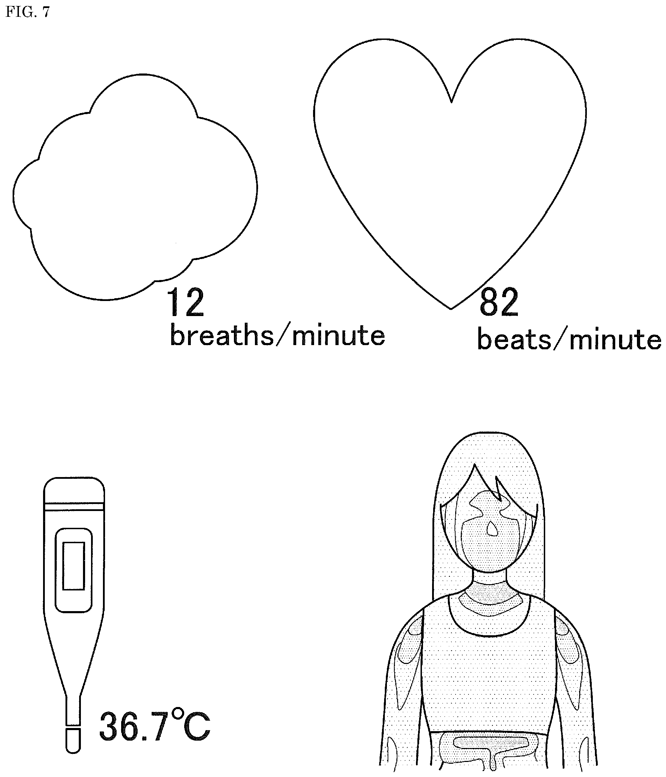

When touching the button B3 to shift to the health check screen G3, the housing 1 displays body temperature, heart rate, respiratory rate or the like measured by the thermography 81 and the microwave sensor 82 of the health condition measuring unit 80 (see FIG. 7). The measured data may be configured to be output to the mobile terminal S of the person M or a terminal device of a doctor in charge, and further to be periodically (every several times) uploaded to the cloud server CSV. Furthermore, the current measurement results of the health condition may be compared or analyzed with the past measurement results, and then the artificial intelligence AI may start a conversation with the person M.

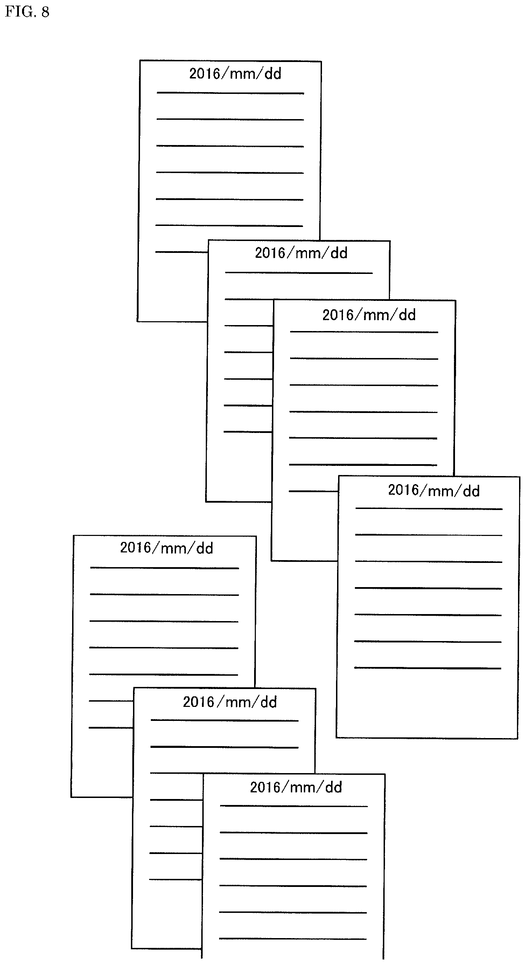

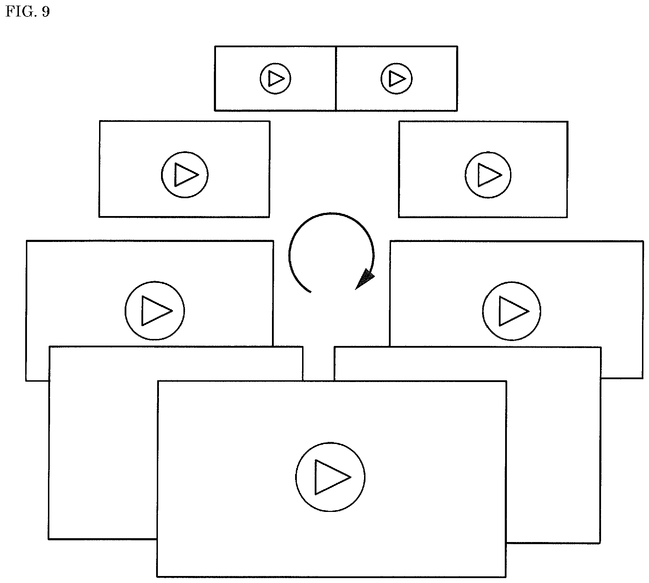

When touching the button B4 to shift to the memo screen G4, the housing 1 displays memo pad data corresponding to the person M specified, which are stored in the memory unit of the personal computer PC, the cloud server CSV, the file server FSV or the like (see FIG. 8). When touching the button B5 to shift to the memo movie screen G5, the housing 1 displays memo movie data corresponding to the person M specified, which is stored in the memory unit of the personal computer PC, the cloud server CSV, the file server FSV or the like (see FIG. 9).

Further, the person M can freely edit the memo pad data using the housing 1. Then, it is preferred to input on a keyboard displayed on the transparent display 20 or write by hand on the transparent display 20. Furthermore, the memo pad data and the memo movie data corresponding to the person M may be output to the mobile terminal S of the person M, or conversely may be input from the mobile terminal S of the person M to the personal computer PC. At this time, it is preferred that the memo pad data can be also edited freely on the mobile terminal S.

When touching the button B6 to shift to the television screen G6, the housing 1 displays a television movie (see FIG. 10). Menus for channel selection and volume adjustment are also available.

Since the Web browser screen G7, the cooking recipe screen G8, and the shopping screen G9 are the same as generally popular screens, their explanations are omitted.

When the photographing unit 70 detects the person M, the housing 1 may activate the reading unit 60. If the reading unit 60 reads ID of the mobile terminal S of the person M and determines that the person M comes for a re-examination, the housing 1 may switch the display screen to a home screen GM exclusive to the person M according to ID of the mobile terminal S or may indicate immediately the route from the current location to the destination by the light sources L.

Displaying of the above screens on the transparent display 20 and various controls/processes of the input detection unit 30, the microphone 40, the speaker 50, the reading unit 60, the photographing unit 70, the health condition measuring unit 80 are executed in each step by the CPU in accordance with a program stored in the memory unit of the personal computer PC.

As described above, according to the embodiment of the present invention, the housing 1 to store any article A in a storage space surrounded by a plurality of walls 10 comprises the transparent display 20 of displaying the operation screen, the input detection unit 30 of detecting an input onto the input area displayed on the operation screen, the memory unit of storing data, and the person specifying unit 60, 70 of specifying the person M, wherein the housing 1 specifies the person M with the person specifying unit 60, 70 to display the home screen GM corresponding to the person M on the transparent display 20.

Thereby, it is possible to perform two-way communication of information between the housing 1, in which the article A stored in the storage space is visible, and the person M. In other words, the housing 1 can be used as not merely a showcase but as if a personal computer exclusive to the person M that approaches or is attracted thereto.

In the embodiment, there are provided the microphone 40 and the speaker 50. Thereby, two-way communication of information can be performed not only with letters, still images, moving images but also with voices.

In the embodiment, there is provided the reading unit 60 of reading the terminal information ID of the mobile terminal S. Thereby, it is possible to specify the person M based on the terminal information ID of the mobile terminal S.

In the embodiment, there is provided the person detection unit 70 of detecting the approach of the person M. Thereby, it is possible to detect whether or not the person M has approached the housing 1 and make such approach a reference for timing of various controls.

In the embodiment, the person detection unit 70 is the photographing unit 70 of photographing the person M. Thereby, the approach of the person M can be detected by performing difference processing to the still image or the moving image taken by the photographing unit 70.

In the embodiment, there is provided the health condition measuring unit 80 of measuring the health condition of the person M. When the person detection unit 70 detects the person M, the health condition measuring unit 80 starts measuring. Thereby, it is possible to measure the health condition of the person M at the same time as detecting the person M.

In the embodiment, the health condition measuring unit 80 has at least one of the thermography 81 of measuring the body temperature of the person M and the microwave sensor 82 of measuring the heart rate or the respiratory rate of the person M. Thereby, it is possible to measure body temperature, heart rate, respiratory rate or the like of the person M.

In the embodiment, the building model A or the map showing the layout of the building is stored in the storage space, and the light source(s) L is/are attached to the building model A or the map. Thereby, it makes easier to understand the current location, the destination, the route therebetween or the like.

In the embodiment, the front wall 11 of the walls 10 comprises the glass plate 21 on the inner side and the transparent display 20 on the outer side. Thereby, even if the size of the transparent display 20 is increased, it is possible to prevent the transparent display 20 from being damaged. Also, even if the storage space is cooled to low temperature, such temperature does not affect the transparent display 20.

In the embodiment, there are provided the six walls 10 including the front wall 11, the rear wall 12, the left side wall 13, the right side wall 14, the top wall 15, and the bottom wall 16. The left side wall 13 and the rear wall 12 are connected by curved surface, and the rear wall 12 and the right side wall 14 are connected by curved surface, respectively. And there is provided the illumination unit 17 of illuminating the storage space beside the front wall 11. Thereby, the illumination light of the illumination unit 17 uniformly diffuses in the storage space by being reflected by the curved surfaces, so that the illumination light of the illumination unit 17 is substituted for a backlight of the transparent display 20 to clearly distinguish between the transparent state and the opaque state. As a result, the still image or the moving image displayed on the transparent display 20 becomes easy to see, and further the building model A or the map in the storage space can be made invisible.

Further, it may be configured as a comprehensive guidance system comprising the housing 1 (and the personal computer PC), the mobile terminal S, the cloud server CSV, the file server FSV or the like. The mobile terminal S may directly access the data uploaded to the cloud server CSV or the file server FSV according to a program stored in the mobile terminal S and then exchange the data.

### (Modification)

The housing 1, in the above embodiment, is configured as the comprehensive guidance device, but it may be configured as a refrigerator that keeps and conserves foods and drinks at ordinary homes or a showcase that displays products/goods at shops. When the housing 1 is applied to a refrigerator, since foods and drinks kept therein can be visually confirmed, it is possible to search a recipe corresponding to such ingredients using the internet on the spot with no need to open and close a door. Also, it is possible to order missing foods and drinks. For example, it is possible to realize an internal image, which is displayed on the operation display device of the refrigerator as described in Japanese Unexamined Patent Application Publication No. 2015-232412, on a door of a real refrigerator.

When the housing 1 is applied to a showcase, it is possible to display information such as an origin (or a manufacturing factory) and/or specifications of product, to explain a method of use by image, and to show the product from every angle without taking out the product.

The person detection unit 70, in the above embodiment, is used in common as the photographing unit 70 of photographing the person M, but it may be another unit such as an infrared sensor of sensing the approach of the person M.

The person M, in the above embodiment, is specified by reading ID of the mobile terminal S carried by the person M with the reading unit 60, but the person M may be directly specified by performing face authentication based on the image taken by the photographing unit 70. In other words, the reading unit 60 and the photographing unit 70 can be paraphrased as the person specifying unit that specifies the person M. The person specifying unit may be an authentication unit relating to other objects such as an iris of a pupil, a vein of a hand or a fingerprint, a voice print or the like.

Although the preferred embodiments of the present invention have been described in detail, the present invention is not limited to the above-described embodiments, and various modifications and changes may be made within the scope of the gist of the present invention described in the claims.

### Reference Signs List

1...housing
10...walls, 11...front wall, 12...rear wall, 13...left side wall, 14...right side wall, 15...top wall, 16...bottom wall, 17...lighting unit
20...transparent display, 21...glass plate
30...input detection unit
40...microphone (voice input unit)
50...speaker (sound output unit)
60...reading unit (person specifying unit)
70...photographing unit (person detection unit, person specifying unit)
80...health condition measuring unit, 81...thermography (body temperature measuring unit),
82...microwave sensor
A...building model (an article), L...light source(s)
M...person, S...mobile terminal, ID...terminal information

## Claims

1. A housing to store any article in a storage space surrounded by a plurality of walls, comprising:
a transparent display of displaying an operation screen;
an input detection unit of detecting an input onto an input area displayed on the operation screen;
a memory unit of storing data; and
a person specifying unit of specifying a person,
wherein the housing specifies the person with the person specifying unit to display a home screen corresponding to the person on the transparent display.

2. The housing according to claim 1, further comprising a voice input unit and a voice output unit.

3. The housing according to claim 2, wherein the housing has a conversation with the person based on data, corresponding to the person, stored in the memory unit.

4. The housing according to any one of claims 1 to 3, wherein the housing outputs data corresponding to the person on the transparent display.

5. The housing according to any one of claims 1 to 4, wherein the person specifying unit is a reading unit of reading terminal information of a mobile terminal or a face authentication unit of performing face authentication of the person.

6. The housing according to any one of claims 1 to 5, further comprising a person detection unit of detecting approach of the person, and a health condition measuring unit of measuring health condition of the person, wherein the housing detects the person with the person detection unit to start measuring with the health condition measuring unit and store data on the health condition measured in the memory unit.

7. The housing according to claim 6, wherein the health condition measuring unit includes at least one of a body temperature measuring unit of measuring body temperature of the person and a microwave sensor of measuring heart rate of the person.

8. The housing according to any one of claims 1 to 7, further comprising a building model or a map showing a layout of a building in the storage space, and light sources attached to the building model or the map, wherein the light sources are turned on or blinked according to a route from a current location to a destination when the destination is selected on the operation screen.

9. A system comprising a housing according to any one of claims 1 to 8, and a mobile terminal carried by a person to exchange data with the housing.

10. The system according to claim 9, wherein the system outputs data, corresponding to the person specified by a person specifying unit, stored in a memory unit to the mobile terminal of the person.
